# EUROPÄISCHE PATENTSCHRIFT

(11) **EP 0 919 750 B1**
(45) Veröffentlichungstag und Bekanntmachung des Hinweises auf die Patenterteilung: **28.05.2003**
(21) Anmeldenummer: 98121089.1
(22) Anmeldetag: 06.11.1998
(51) Int. Cl.: F16K 5/20

(54) **Vorrichtung zum Abdichten von in Leitungen für die Durchleitung von Flüssigkeiten oder Gasen eingebauten Absperrorganen**
Sealing device for shut-off elements in gas or fluid conducts
Dispositif d'étanchéité pour des organes de fermeture dans des conduits pour le transport de fluides ou de gaz

(30) Priorität: 27.11.1997 DE 19752591
(43) Veröffentlichungstag der Anmeldung: 02.06.1999
(73) Patentinhaber: Borsig GmbH, 13507 Berlin (DE)
(72) Erfinder: Mentzel, Elmar, 13503 Berlin (DE); Pohlisch, Andreas, 15366 Neuenhagen (DE)
(74) Vertreter: Radünz, Ingo, Dipl.-Ing.

(56) Entgegenhaltungen:
- DE-A- 1 809 563
- DE-A- 2 005 794
- DE-A- 19 544 901
- DE-C- 4 423 801
- FR-A- 2 094 215
- GB-A- 2 213 564

## Beschreibung

Die Erfindung betrifft eine Vorrichtung zum Abdichten von in Leitungen für die Durchleitung von Flüssigkeiten oder Gasen eingebauten Absperrorganen, insbesondere eines Kugelkükens eines Kugelhahns, nach dem Oberbegriff des Hauptanspruchs.

Kugelhähne werden in Rohrleitungen verwendet und weisen ein in die Rohrleitung einsetzbares Gehäuse auf. In dem Gehäuse ist ein das eigentliche Absperrorgan bildende und um eine Achse drehbares Kugelküken angeordnet. Das Kugelküken ist gegenüber dem Gehäuse dadurch abdichtbar, daß gegen die Mantelfläche des Kugelkükens vorgesehene Dichtungen drücken.

Aus der DE 44 23 801 ist eine Vorrichtung mit einer Dichtungsanordnung bekannt, die das Absperrorgan gegen ein Gehäuse abdichtet. Die Dichtungsanordnung weist einen gegen die Mantelfläche des Absperrorgans anlegbaren Dichtring und einen den Dichtring abstützenden Sitzring auf. Weiterhin sind zwei mit einem Druckmedium steuerbar beaufschlagbare Kammern vorgesehen, über die der Dichtring von der Mantelfläche abhebbar und gegen diese anpreßbar ist. Dabei weist die Dichtungsanordnung einen Mitnehmerkörper auf, der formschlüssig mit dem Sitzring verbunden ist. Weiterhin ist ein auf dem Mitnehmerkörper angeordneter verschiebbarer Zwischenkolben vorgesehen. Die erste der beiden vorgesehenen Kammern liegt zwischen dem Mitnehmerkörper und dem Zwischenkolben. Beim Beaufschlagen mit gesteuertem Druck wird der Mitnehmerkörper in Abheberichtung des Dichtringes bewegt. Die zweite Kammer ist zwischen dem Zwischenkolben und dem Gehäuse angeordnet. Hier wird bei Beaufschlagung mit gesteuertem Druck der Zwischenkolben in Andruckrichtung bewegt. Zwischen Sitzring und Zwischenkolben sind Federelemente angeordnet, die in Andruckrichtung vorgespannt sind.

Die angegebene Vorrichtung weist den Nachteil auf, daß sie recht aufwendig gestaltet ist und die Austauschbarkeit der Einzelteile stark einschränkt.

Der Erfindung liegt die Aufgabe zugrunde, eine Vorrichtung zu schaffen, die weniger aufwendig und damit kostensparend konstruiert ist und trotzdem sicher und zuverlässig arbeitet und die einfache Austauschbarkeit und Montage der Bauteile sichergestellt ist.

Die Aufgabe wird erfindungsgemäß mit den Merkmalen des Hauptanspruches gelöst. Weitere vorteilhafte Ausgestaltungen der Erfindung sind in den Unteransprüchen angegeben.

Die Vorteile der Erfindung bestehen im wesentlichen darin, daß die Sitzringbewegung direkt druckgesteuert ist, wobei die Rückstellkraft für die Abhebung des Sitzringes von dem Kugelküken durch Druckbeaufschlagung auf den Sitzring direkt erzeugt wird. Durch die Anordnung einer zweiten Dichtung im Sitzring wird, bedingt durch den Totraumdruck, die Rückstellkraft auf den Sitzring neutralisiert, so daß die Rückstellkraft keine Auswirkung auf den Sitzring ausübt, d.h. Differenzdrücke neutralisiert werden.

Weiterhin sind vorteilhafterweise mehrere auf den Umfang des Sitzringes verteilte Kanalbohrungen vorgesehen, die einen Druckausgleich zwischen dem Kugelhahnmittelraum und einer Druckkammer schaffen, die zwischen dem Sitzring und einer Sitzbuchse vorhanden ist. Damit ist gewährleistet, daß die bekannte "Double-Piston"-Wirkungsweise des Dichtringes funktioniert. Die zuvor genannten Bohrungen im Sitzring dienen zur Spülung der Kugel/Dichtungskontaktflächen, wenn der Sitzring mit dem Hauptdichtring zurückgefahren ist. Über einen äußeren Anschluß über eine weitere Bohrung durch das Hahngehäuse und einenMantelring ist die Zuführung von Spülflüssigkeit vorgesehen.

Zusätzlich sind die zuvor genannten Bohrungen im Sitzring zur Injektion von viskosen Dichtmitteln für eine Notabdichtung bei Beschädigung des Hauptdichtringes verwendbar. Damit ergibt sich eine sogenannte "Secondary sealant funktion".

Darüber hinaus ist die Vorrichtung zum Abdichten nicht verschweißt, sondern besteht aus lösbaren formschlüssigen Verbindungen und wird über einen zweigeteilten Klammerring im Hahngehäuse zusammengehalten, so daß eine einfache Austauschbarkeit der Bauteile gewährleistet ist.

Alle Bauteile liegen unter Druckbelastung, sich gegeneinander abstützend, an der äußeren Gehäusebohrung an, so daß Deformationen und ein Verklemmen verhindert wird. Der von außen aufgebrachte Steuerdruck zum Schalten des Sitzringes wirkt der Druckbelastung des Sitzringes von der Leitungsseite entgegen und neutralisiert einen Teil der Kräfte. Um eine freie Bewegung des Sitzringes zu gewährleisten, wird die Kammer über weitere Bohrungen mit einem definierten Druck beaufschlagt.

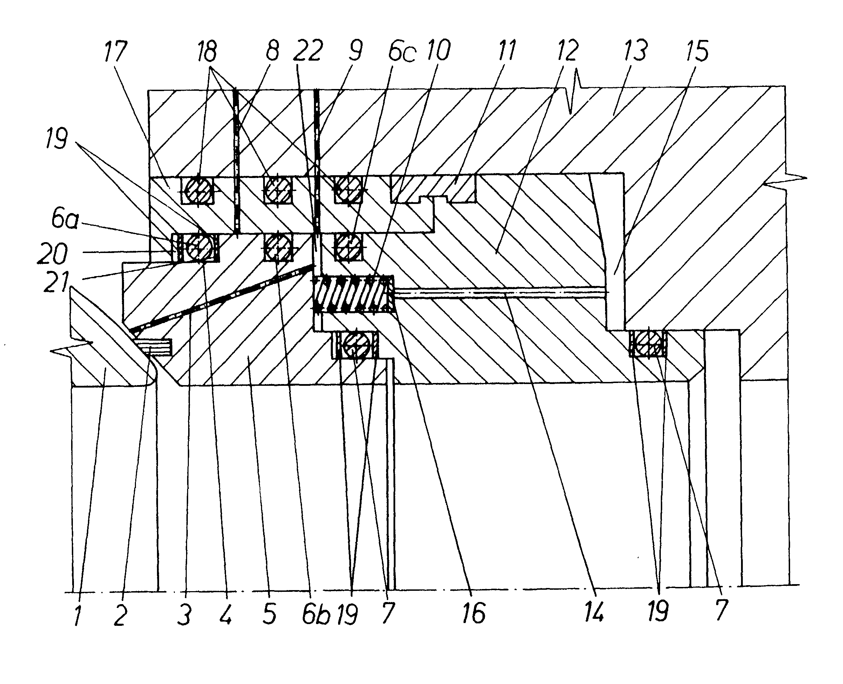

Die Erfindung wird nachstehend anhand eines in der Zeichnung dargestellten Ausführungsbeispiels näher erläutert.

Die Zeichnung zeigt einen Teilschnitt durch eine Dichtungsanordnung nach der Erfindung.

Der in der Zeichnung dargestellte Längsteilschnitt eines Kugelhahns zeigt ein Gehäuse 13, in dem ein Kugelküken 1 angeordnet ist. Das Kugelküken 1 ist um eine zur Durchflußrichtung senkrecht stehende Achse drehbar. Die Dichtungsanordnung besteht aus vier einzelnen Hauptgruppen, nämlich aus einem Sitzring 5, einem Mantelring 17, einer Sitzbuchse 12 und einem Klammerring 11, die in ihrer Anordnung unter Verwendung von O-Ring-Dichtungen 6, 7, 18,19 gegeneinander und gegenüber dem Gehäuse 13 abgedichtet sind.

Weiterhin ist eine Bohrung 8 vorgesehen, die durch das Gehäuse 13 und den Mantelring 17 an die Grenzfläche zwischen dem Mantelring und dem Sitzring geführt ist.

In der Dichtungsanordnung werden der Sitzring 5 und die Sitzbuchse 12 formschlüssig von dem Mantelring 17 umschlossen. Mittels des Klammerringes 11 entsteht dabei eine mechanisch feste, aber lösbare Verbindung zwischen der Sitzbuchse 12 und dem Mantelring 17. Der Sitzring 5 ist dabei als frei bewegliches Bauteil zwischen der Sitzbuchse 12 und dem Mantelring 17 als Ringkolben wirkend eingeschlossen.

Ein Hauptdichtring 2, der in dem Sitzring 5 integriert ist, wird über eine Feder 10, die in einer Ausnehmung der Sitzbuchse 12 angeordnet ist, gegen die Oberfläche des Kugelkükens 1 gedrückt. Eine in der Sitzbuchse 12 angebrachte Bohrung 14 stellt von einer zwischen dem Gehäuse 13 und der Sitzbuchse 12 vorgesehene Kammer 15 über ein am Kopfende der für die Feder 10 vorgesehenen Ausnehmung in der Sitzbuchse 12 angeordnetes Prallblech 16 und die Ausnehmung für die Feder sowie über im Sitzring 5 befindliche Bohrungen 3 eine Verbindung zum Hahntotraum her.

Eine weitere Bohrung 9 führt durch das Gehäuse 13 und den Mantelring 17 in eine Ringkammer 22, die zwischen dem Sitzring 5 und der Sitzbuchse 12 ausgebildet ist.

Aufgrund der Formgebung und Anordnung des Sitzringes 5 und des Mantelringes 17 wird zwischen einer Stirnfläche 20 des Mantelringes und einer Stirnfläche 21 des Sitzringes eine Druckkammer 4 ausgebildet, die durch einen freien O-Ring 6a abgedichtet ist. Die Druckkammer 4 läßt bei Beaufschlagung mit einem über Bohrungen 8 zugeführten Druckmedium in die Druckkammer den Sitzring 5 eine Bewegung in Richtung der Sitzbuchse 12 ausführen. Damit wird der Hauptdichtring 2, der in den Sitzring 5 integriert ist, entgegen der Federkraft der vorgespannten Feder 10 von der Oberfläche des Kugelkükens 1 als primäres Absperrorgan abgehoben.

Die Rückstellkraft für die Abhebung des Sitzringes 5 von der Oberfläche des Kugelkükens 1 wird demzufolge durch Druckbeaufschlagung auf den Sitzring direkt erzeugt. Durch die Anordnung eines zweiten Dichtringes 6b im Sitzring 5 wird die Rückstellkraft auf den Sitzring bedingt durch den Totraumdruck neutralisiert, so daß die Rückstellkraft keine Auswirkung auf den Sitzring hat.

Die im Sitzring 5 verteilt angeordneten Bohrungen 3 schaffen einen Druckausgleich zwischen dem Kugelhahnmittelraum und der zwischen dem Sitzring 5 und der Sitzbuchse 12 vorhandenen Druckkammer 22. Damit ist gewährleistet, daß die bekannte Double-Piston-Wikungsweise des Dichtringes 6b funktioniert.

Die Bohrungen 3 im Sitzring 5 dienen weiterhin zur Spülung der Kugelküken-Dichtungskontaktflächen, wenn der Sitzring 5 mit dem integrierten Hauptdichtring 2 zurückgefahren ist. Über die Bohrung 9 wird die Spülflüssigkeit zugeführt. Weiterhin sind die Bohrungen 3 im Sitzring 5 zusätzlich zur Injektion von viskosen Dichtmitteln für die Notabdichtung bei Beschädigung des Hauptdichtringes 2 verwendbar.

Die Dichtungsanordnung ist nicht verschweißt, sondern besteht aus lösbaren formschlüssigen Bauteilen, die über den zweigeteilten Klammerring 11 im Kugelhahngehäuse 13 zusammengehalten werden und damit einfach montierbar und austauschbar sind.

Alle Bauteile stützen sich gegeneinander ab und liegen unter Druckbelastung an der äußeren Bohrwandung des Gehäuses 13 an, so daß Deformationen und ein Verklemmen der einzelnen Bauteile verhindert wird. Der von außen über die Bohrung 8 aufgebrachte Steuerdruck zum Schalten des Sitzringes 5 wirkt der Druckbelastung des Sitzringes von der Leitungsseite her entgegen und neutralisiert einen Teil der Kräfte. Um eine freie Bewegung des Sitzringes 5 sicher zu gewährleisten, wird über die Bohrung 8 die Druckkammer 4 mit einem definierten Druck beaufschlagt.

## Patentansprüche

1. Vorrichtung zum Abdichten von in Leitungen für die Durchleitung von Flüssigkeiten oder Gasen eingebauten Absperrorganen, insbesondere von Kugelhähnen, mit einer Dichtungsanordnung, die das Absperrorgan gegen ein Gehäuse abdichtet, wobei die Dichtungsanordnung einen gegen die Mantelfläche des Absperrorgans anlegbaren Dichtring (2), einen den Dichtring (2) abstützenden Sitzring (5) und eine Sitzbuchse (12) aufweist, so daß eine Druckkammer gebildet wird, über die der Sitzring (5) bei Druckbeaufschlagung als Ringkolben gegen in einer Ausnehmung der Sitzbuchse (12) angeordnete vorgespannte Federelemente anpreßbar ist, **dadurch gekennzeichnet, daß** der Sitzring (5) und die Sitzbuchse (12) formschlüssig von einem Mantelring (17) umschlossen sind, daß ein Klammerring (11) so angeordnet ist, daß eine mechanisch feste, aber lösbare Verbindung zwischen der Sitzbuchse 12 und dem Mantelring (17) entsteht, wobei der Sitzring (5) als frei bewegliches Bauteil zwischen der Sitzbuchse (12) und dem Mantelring (17) als Ringkolben wirkend eingeschlossen ist, daß eine Teilfläche (21) des Sitzringes (5) über eine Dichtung (6a) abgedichtet und als Ringkolben ausgebildet ist und daß durch Druckbeaufschlagung auf die Teilfläche (21) des Sitzringes (5) der ausgebildete Ringkolben direkt entgegen des durch die vorgespannten Federelemente und den Innendruck der Leitung oder den Hahntotraum erzeugten Anpreßdruckes über den ausgebildeten Ringkolben der in dem Sitzring (5) integrierte Dichtring (2) von der Oberfläche des Kugelkükens (1) abzuheben ist.

2. Vorrichtung nach Anspruch 1, **dadurch gekennzeichnet, daß** eine weitere Dichtung (6b) am Sitzring (5) angeordnet ist, der den auf die Oberfläche des ausgebildeten Ringkolbens des Sitzringes (5) wirkenden Druck neutralisiert.

3. Vorrichtung nach Anspruch 1, **dadurch gekennzeichnet, daß** mehrere Bohrungen (3) im Sitzring (5) angeordnet sind und daß der Druck aus dem Hahntotraum über einen oder mehrere der Bohrungen (3) zur Rückseite des Sitzringes (5) für die Neutralisation des den Sitzring (5) umgebenden Druckes und für die Funktion des Double-Piston-Effektes geführt ist.

4. Vorrichtung nach Anspruch 3, **dadurch gekennzeichnet, daß** die Bohrungen (3) über eine weitere Bohrung (9) mit dem Äußeren des Gehäuses (13) in Verbindung stehen und daß über die Bohrung (9) Spülmittel für die Reinigung der Kugeloberfläche einzuleiten ist.

5. Vorrichtung nach Anspruch 4, **dadurch gekennzeichnet, daß** die Bohrung (9) zum Einleiten eines hochviskosen Dichtmittels hinter den Sitzring (5) zur Notabdichtung über eine ausgebildete Druckkammer (22) vorgesehen ist, über die der Sitzring (5) zur Abdichtung mit hoher Anpreßkraft gegen die Oberfläche des Kugelkükens (1) zu liegen kommt.

6. Vorrichtung nach Anspruch 1, **dadurch gekennzeichnet, daß** eine Bohrung (14) durch die Sitzbuchse (12) geführt ist, die für einen Druckausgleich vorgesehen ist, sobald der Druck in der Druckkammer (15) aufgrund von Diffusionsvorgängen größer als der Hahntotraumdruck ist, und daß die Bohrung (14) bei rückwärtiger Druckbeaufschlagung durch ein dünnes Prallblech (16) als Federunterlage der Feder (10) verschlossen ist.

## Claims

1. Device for sealing blocking elements incorporated in ducts for conducting liquids or gases, particularly ball valves, comprising a sealing arrangement which seals the blocking element relative to a housing, wherein the sealing arrangement comprises a sealing ring (2) placeable against the circumferential surface of the blocking element, a seating ring (5) supporting the sealing ring (2) and a seating bush (12), so that a pressure chamber is formed by way of which the seating ring (5) when loaded with pressure is pressable as an annular piston against biased spring elements arranged in a recess of the seating bush (12), **characterised in that** the sealing ring (5) and the seating bush (12) are enclosed in shape-locking manner by a casing ring (17), that a clip ring (11) is so arranged that a mechanically firm, but detachable connection between the seating bush (12) and the casing ring (17) arises, wherein the seating ring (5) is included between the seating bush (12) and the casing ring (17) as a freely movable component acting as an annular piston, that a part surface (21) of the seating ring (5) is sealed by way of a seal (6a) and is formed as an annular piston and that through pressure loading on the part surface (21) of the seating ring (5) of the formed annular piston directly against the pressing-on pressure, which is produced by the biased spring elements and the internal pressure of the duct or the valve clearance volume, the sealing ring (2) integrated in the seating ring (5) can be raised off the surface of the ball plug (1) by way of the formed annular piston.

2. Device according to claim 1, **characterised in that** a further seal (6b) is arranged at the seating ring (5), which neutralises the pressure acting on the surface of the formed annular piston of the seating ring (5).

3. Device according to claim 1, **characterised in that** several bores (3) are arranged in the seating ring (5) and that the pressure from the valve clearance volume is led by way of one or several of the bores (3) to the rear side of the seating ring (5) for neutralisation of the pressure surrounding the seating ring (5) and for the function of a double-piston effect.

4. Device according to claim 3, **characterised in that** the bores (3) are connected with the exterior of the housing (13) by way of a further bore (9) and that washing means for cleaning the ball surface can be introduced by way of the bore (9).

5. Device according to claim 4, **characterised in that** the bore (9) is provided for introducing a high-viscosity sealant behind the seating ring (5) for emergency sealing by way of a formed pressure chamber (22), by way of which the seating ring (5), for sealing, comes to bear with high pressing force against the surface of the ball plug (1).

6. Device according to claim 1, **characterised in that** a bore (14) is led through the seating bush (12) and is provided for a pressure equalisation as soon as the pressure in the pressure chamber (15) is greater than the valve clearance volume pressure due to diffusion processes, and that the bore (14) in the case of rearward pressure loading is closed by a thin baffle plate (16) as spring support of the spring (10).

## Revendications

1. Dispositif pour l'étanchemen d'organes d'obturation incorporés dans des conduites pour le passage de liquides ou de gaz, en particulier de robinets à boisseau sphérique, comprenant un agencement d'étanchéité qui étanche l'organe d'obturation vis-à-vis d'un corps, l'agencement d'étanchéité présentant une bague d'étanchéité (2) applicable contre la surface d'enveloppe de l'organe d'obturation, une bague de siège (5) supportant la bague d'étanchéité (2), et une douille de siège (12), de sorte qu'un compartiment de pression est formé, par l'intermédiaire duquel la bague de siège (5), sous une contrainte de pression, peut être pressée en tant que piston annulaire contre des éléments à ressorts précontraints disposés dans un creux de la douille de siège (12), **caractérisé en ce que** la bague de siège (5) et la douille de siège (12) sont entourées avec coopération de forme par une bague d'enveloppe (17), qu'une bague d'agrafage (11) est disposée de telle sorte qu'un assemblage mécaniquement fixe, mais amovible, est produit entre la douille de siège (12) et la bague d'enveloppe (17), la bague de siège (5) étant enfermée en tant que composant librement mobile entre la douille de siège (12) et la bague d'enveloppe (17), en agissant comme piston annulaire, qu'une surface partielle (21) de la bague de siège (5) est étanchée par l'intermédiaire d'un joint (6a) et est formée en tant que piston annulaire et que, par application de pression sur la surface partielle (21) de la bague de siège (5), la bague d'étanchéité (2) intégrée à la bague de siège (5) peut être décollée de la surface du boisseau sphérique (1) par l'intermédiaire du piston annulaire formé, directement contre la pression de serrage produite par les éléments à ressorts précontraints et par la pression interne de la conduite ou l'espace mort du robinet.

2. Dispositif suivant la revendication 1, **caractérisé en ce qu'**un autre joint (6b) est disposé sur la bague de siège (5), qui neutralise la pression agissant sur la surface du piston annulaire formé de la bague de siège (5).

3. Dispositif suivant la revendication 1, **caractérisé en ce que** plusieurs trous (3) sont disposés dans la bague de siège (5) et que la pression de l'espace mort du robinet est envoyée par l'intermédiaire de l'un ou de plusieurs des trous (3) du côté arrière de la bague de siège (5) pour la neutralisation de la pression entourant la bague i de siège (5) et pour le fonctionnement de l'effet de double piston.

4. Dispositif suivant la revendication 3, **caractérisé en ce que** les trous (3) sont en liaison avec l'extérieur du corps (13) par l'intermédiaire d'un autre trou (9) et qu'un agent de rinçage peut être envoyé par l'intermédiaire du trou (9) pour le nettoyage de la surface sphérique.

5. Dispositif suivant la revendication 4, **caractérisé en ce que** le trou (9) est prévu pour l'introduction d'un agent d'étanchéité de viscosité élevée pour l'étanchement de secours par l'intermédiaire d'un compartiment de pression (22) formé, par l'intermédiaire duquel la bague de siège (5) arrive au contact de la surface du boisseau sphérique (1) avec une force de serrage élevée pour l'étanchement.

6. Dispositif suivant la revendication 1, **caractérisé en ce qu'**un trou (14) est ménagé au travers de la douille de siège (12), qui est prévu pour une compensation de pression dès que la pression dans le compartiment de pression (15), en raison de processus de diffusion, est supérieure à la pression de l'espace mort du robinet, et que le trou (14), lors d'une sollicitation en pression inverse, est fermé par une mince tôle de rebondissement (16) en tant que semelle de ressort du ressort (10).
